# EUROPÄISCHE PATENTSCHRIFT

(11) **EP 2 643 394 B1**
(45) Veröffentlichungstag und Bekanntmachung des Hinweises auf die Patenterteilung: **21.06.2017**
(21) Anmeldenummer: 11791490.3
(22) Anmeldetag: 16.11.2011
(51) Int. Cl.: B32B 7/06, B32B 27/12, B32B 27/30, B32B 27/32, B32B 27/36, B29C 70/08, C08J 7/04

(54) **FORMTEILE AUS FASERVERSTÄRKTEN MATERIALIEN MIT LACKIERTEN OBERFLÄCHEN UND IHRE HERSTELLUNG**
FIBRE REINFORCED SHAPED ARTICLES WITH PAINTED SURFACES AND PROCESS FOR THEIR PRODUCTION
ARTICLES FAÇONNÉS RENFORCÉS PAR DES FIBRES AVEC SURFACES PEINTES ET PROCÉDÉ DE FABRICATION

(30) Priorität: 22.11.2010 DE 102010061739
(43) Veröffentlichungstag der Anmeldung: 02.10.2013
(60) Teilanmeldung: 17170255.8
(73) Patentinhaber: Karl Wörwag Lack- Und Farbenfabrik GmbH & Co. Kg, 70435 Stuttgart (DE)
(72) Erfinder: WARTA, Helge, 71254 Ditzingen (DE); FÄRBER, Peter, 71116 Gärtringen (DE)
(74) Vertreter: Patentanwaltskanzlei Cartagena
(86) Internationale Anmeldenummer: PCT/EP2011/070232
(87) Internationale Veröffentlichungsnummer: WO 2012/069344

(56) Entgegenhaltungen:
- WO-A1-99/47620
- DATABASE WPI Week 199617 Thomson Scientific, London, GB; AN 1996-166673 XP002670862, & JP 8 047935 A (HITACHI CHEM CO LTD) 20. Februar 1996 (1996-02-20)
- DATABASE WPI Week 199533 Thomson Scientific, London, GB; AN 1995-251548 XP002670863, & JP 7 156599 A (MITSUBISHI RAYON CO LTD) 20. Juni 1995 (1995-06-20)

## Beschreibung

Die vorliegende Erfindung betrifft ein Verfahren zur Herstellung von Formteilen aus faserverstärkten Materialien mit lackierbaren oder lackierten Oberflächen sowie mittels einem solchen Verfahren hergestellte Formteile.

Zur Substitution metallischer Werkstoffe sind insbesondere im Automobilbereich faserverstärkte Verbundwerkstoffe (kurz Faserverbundwerkstoffe) als alternative Werkstoffe getestet und eingesetzt worden. Faserverbundwerkstoffe lassen sich grundsätzlich recht einfach herstellen und verarbeiten. Auch komplexe Formgebungen sind ohne Schwierigkeiten realisierbar. Problematisch ist allerdings die Lackierung von Formteilen aus solchen Verbundwerkstoffen. Faserverbundwerkstoffe werden in aller Regel aus Faser-Matrix-Halbzeugen hergestellt. Diese bestehen meist aus einer noch nicht ausgehärteten Kunststoffmatrix sowie aus Fasern, die in diese Matrix eingelagert sind. Die Verarbeitung solcher Faser-Matrix-Halbzeuge erfolgt häufig in der Pressform eines Presswerkzeugs, in der das Halbzeug in eine vorgegebene Form überführt und gleichzeitig die Matrix ausgehärtet wird.

Dabei kommt es allerdings vor, dass Fasern (gegebenenfalls trotz eingesetzter Trennmittel) an Wandungen der Pressform des Presswerkzeugs anhaften und deshalb nicht vollständig in die entstehende ausgehärtete Kunststoffmatrix eingebettet sind. Diese Fasern können von der im Presswerkzeug gebildeten Oberfläche des Formteils abstehen, die Oberfläche ist deshalb nur sehr schwierig zu lackieren. Die eingesetzten Trennmittel können ebenfalls zu einer schwierig lackierbaren Oberfläche führen. Um Formteile aus Faserverbundwerkstoffen mit hochwertigen Lackierungen zu überziehen, müssen die Oberflächen der Formteile daher üblicherweise abgeschliffen werden. Durch diesen Vorgang werden häufig Poren offengelegt, welche ebenfalls schwer lackierfähig sind. Aus diesen Gründen ist die Verwendung von Mehrfachgrundierungen mit Zwischenschliff durchaus nicht unüblich.

Aus der JP 8 047935 A und der JP 7 156599 A ist es jeweils bekannt, auf eine Trägerfolie eine Klebstoffzusammensetzung aufzubringen und den resultierenden Verbund mit einem Faserverbundwerkstoff zu kombinieren. So wird eine dreilagige Laminatstruktur gebildet.

In der WO 99/47620 A1 wird ein Film beschrieben, der aus zwei Harzschichten und einer Trägerfolie besteht. Dieser Film wird auf ein Gewebe aufgebracht, wobei ein Teil des Harzes in das Gewebe eindringt. Es wird ebenfalls eine dreilagige Laminatstruktur gebildet.

Der vorliegenden Erfindung lag die Aufgabe zugrunde, eine vereinfachte technische Lösung zur Herstellung von lackierten Formteilen aus Faserverbundwerkstoffen bereitzustellen.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 und 3 angegeben. Der Wortlaut sämtlicher Ansprüche wird hiermit durch Bezugnahme zum Inhalt dieser Beschreibung gemacht.

Das erfindungsgemäße Verfahren dient wie die beschriebenen aus dem Stand der Technik bekannten Verfahren zur Herstellung von Formteilen aus Faserverbundwerkstoffen mit einer lackierten Oberfläche. Es umfasst stets die folgenden Schritte:
- Bereitstellung eines Faser-Matrix-Halbzeugs: Wie die oben erwähnten Verfahren geht auch das erfindungsgemäße Verfahren von Faser-Matrix-Halbzeugen aus, wie sie aus dem Stand der Technik bekannt sind. Auf erfindungsgemäß besonders bevorzugte Faser-Matrix-Halbzeuge wird noch im Detail eingegangen.
- Bereitstellung eines Schichtverbunds, der eine Trägerfolie umfasst, die einseitig mit einem ersten Lack beschichtet ist: Bei der Implementierung eines solchen Schichtverbunds in einem Verfahren zur Herstellung von Formteilen aus Faserverbundwerkstoffen handelt es sich um ein Kernmerkmal der vorliegenden Erfindung. Derartige Schichtverbünde sind beispielsweise in der von der Anmelderin eingereichten internationalen Anmeldung mit der Publikationsnummer WO 2009/024310 A2 (Aktenzeichen PCT/EP2008/006765) beschrieben. Gegebenenfalls weisen sie neben der Schicht aus dem ersten Lack noch weitere Lackschichten auf. Sie zeichnen sich insbesondere dadurch aus, dass sich die erwähnte Trägerfolie von der oder den darauf befindlichen Lackschichten ablösen lässt, selbst wenn diese bereits thermisch und/oder mit UV vollständig gehärtet ist oder sind. Die Trägerfolie dient also gegebenenfalls nur als "Transfermedium", mittels der ein Lack auf ein Substrat transferiert werden kann. Dies kann grundsätzlich auch im vorliegend beschriebenen Verfahren so gehandhabt werden, hierzu aber später noch mehr.
- Flächiges Inkontaktbringen des Faser-Matrix-Halbzeugs mit der Lackseite des Schichtverbundes unter Druck und/oder Temperatur: In diesem Schritt wird aus dem Schichtverbund und dem Faser-Matrix-Halbzeug ein Formteil erhalten, das einen Grundkörper aus einem Faserverbundwerkstoff aufweist und eine Oberfläche, die aus dem Schichtverbund gebildet ist. Dabei liegt die Trägerfolie des Schichtverbundes außen. Die Trägerfolie nimmt in diesem Verfahrensschritt auch die Funktion der sonst üblicherweise eingesetzten Trennmittel wahr. Die Trägerfolie kann entsprechend unter Freilegung des ersten Lacks von dem hergestellten Formteil abgezogen werden.

Entsprechend werden im Rahmen eines erfindungsgemäßen Verfahrens die Trägerfolie von dem erhaltenen Formteil abgezogen und ein zweiter Lack auf den ersten Lack aufgetragen.

In bevorzugten Ausführungsformen erfolgt das Abziehen der Trägerfolie unmittelbar in einem Folgeschritt des erfindungsgemäßen Verfahrens, in der Regel nach Abkühlen des Formteils.

Die erfindungsgemäße Vorgehensweise bietet deutliche Vorteile gegenüber den aus dem Stand der Technik bekannten Vorgehensweisen. Überraschenderweise hat sich herausgestellt, dass die nach dem Abziehen der Trägerfolie freigelegte Oberfläche aus dem ersten Lack sehr hochwertig ist. Abstehende Fasern, wie sie eingangs beschrieben wurden, konnten nicht beobachtet werden. Dies galt immer dann, wenn ein Schichtverbund eingesetzt wurde, bei dem die Schicht aus dem ersten Lack bereits vollständig ausgehärtet war und deshalb auch nicht von den Fasern des Halbzeugs durchdrungen werden konnte. Unter einem vollständig ausgehärteten Lack soll im Rahmen der vorliegenden Anmeldung übrigens verstanden werden, dass der Lack im Wesentlichen keine thermisch oder durch aktinische Strahlung vernetzbaren Gruppen mehr aufweist.

Sofern in dem angesprochenen weiteren Verfahrensschritt eine Überlackierung des ersten Lacks mit dem erwähnten zweiten Lack erfolgt, kommt dem ersten Lack eine Funktion als Grundierung zu. Die eingangs erwähnten separaten, der Herstellung eines Verbundwerkstoffs nachgeschalteten Grundierungs- und gegebenenfalls Schleifschritte sind somit überflüssig.

Als erster Lack weist der verwendete Schichtverbund bevorzugt eine Lackschicht auf, die bereits ausgehärtet ist, also keine durch Strahlung und/oder Wärme vernetzbare Komponenten und auch kein Lösungsmittel mehr enthält. Besonders bevorzugt weist der verwendete Schichtverbund als erster Lack eine gehärtete Lackschicht auf Basis von Polyurethan auf. Besonders bevorzugt kommt auch hier ein aus einer Polyurethandispersion hergestellter Lack zum Einsatz. Geeignet sind beispielsweise polyesterbasierende Polyurethandispersionen. Weiterhin sehr gut geeignet sind auch die in der WO 2009/024310 A2 beschriebenen Lacke umfassend eine doppelbindungshaltige, OH-funktionelle Komponente A, eine doppelbindungshaltige, NCO-funktionelle Komponente B und gegebenenfalls eine doppelbindungshaltige Komponente C, wobei es sich bei Komponente A bevorzugt um ein Polyol und bei den Komponenten B und C bevorzugt um Urethanacrylate handelt. Betreffend bevorzugte Merkmale und Eigenschaften solcher Lacke wird auf den Inhalt der WO 2009/024310 A2 verwiesen, welcher hiermit durch Bezugnahme vollumfänglich zum Inhalt der vorliegenden Beschreibung gemacht wird.

Der zweite Lack kann grundsätzlich frei gewählt werden. Er sollte natürlich chemisch kompatibel mit dem ersten Lack sein. Bevorzugt handelt es sich bei dem zweiten Lack um einen pigmentierten Flüssiglack.

Natürlich ist es denkbar, dass auch noch der zweite Lack mit einem oder mehreren weiteren Lacken überlackiert wird, beispielsweise mit einem Klarlack.

Auch betreffend geeignete Trägerfolien kann auf die WO 2009/024310 A2 verwiesen werden. Bevorzugt handelt es sich bei der Trägerfolie um eine einschichtige Folie oder eine mehrschichtige Verbundfolie. Geeignet sind grundsätzlich alle Folien mit Release-Eigenschaften, insbesondere mit Release-Eigenschaften gegen polyurethanbasierte Klebstoffe und Lacke. Es können sowohl tiefziehfähige als auch nicht tiefziehfähige Folien verwendet werden.

Bevorzugt besteht die Trägerfolie im wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und /oder Polymethylmethacrylat.

Besonders bevorzugt weist ein in einem erfindungsgemäßen Verfahren eingesetzter Schichtverbund eine Trägerfolie aus einer Polyolefinfolie auf.

In bevorzugten Ausführungsformen kann der im erfindungsgemäßen Verfahren zum Einsatz kommende Schichtverbund eine haftvermittelnde Schicht umfassen, die auf der Schicht aus dem ersten Lack angeordnet ist. Die Schicht aus dem ersten Lack ist dann zwischen der haftvermittelnden Schicht und der Trägerfolie angeordnet. Beim Aufbringen wird der Schichtverbund dann mit der haftvermittelnden Schicht voran mit dem Faser-Matrix-Halbzeug in Kontakt gebracht.

Geeignete haftvermittelnde Schichten sind dem Fachmann grundsätzlich bekannt und können in Abhängigkeit der chemischen Zusammensetzung der Matrix des Faser-Matrix-Halbzeugs und des ersten Lacks gezielt ausgewählt werden. In bevorzugten Ausführungsformen wird die haftvermittelnde Schicht derart gewählt, dass ihre haftvermittelnden Eigenschaften bei der beim Schritt des flächigen Inkontaktbringens des Faser-Matrix-Halbzeugs mit der Lackseite des Schichtverbundes gewählten Temperatur aktiviert werden. Bei Raumtemperatur ist die Schicht bevorzugt trocken und nicht klebrig. Bevorzugt ist die haftvermittelnde Schicht wie die Schicht aus dem ersten Lack bereits ausgehärtet.

Sie enthält entsprechend vorzugsweise keine thermisch oder durch aktinische Strahlung vernetzbaren Gruppen mehr. Ihre haftvermittelnden Eigenschaften sind bevorzugt ausschließlich durch Erwärmung aktivierbar.

Das Inkontaktbringen des Faser-Matrix-Halbzeugs mit der Lackseite des Schichtverbundes kann beispielsweise durch Hinterspritzen oder Hinterschäumen erfolgen. In bevorzugten Ausführungsformen erfolgt das Inkontaktbringen des Faser-Matrix-Halbzeugs mit der Lackseite des Schichtverbundes jedoch in einem Presswerkzeug unter gleichzeitiger dreidimensionaler Formgebung des Halbzeuges. Presswerkzeuge zur Herstellung von Formteilen aus Faserverbundstoffen sind dem Fachmann bekannt. In der Regel umfassen sie zwei oder mehr Presselemente mit zueinander komplementärem Profil, welche die eigentliche Pressform bilden. Die Innenkonturen der Pressform definieren die äußere Form des herzustellenden Formteils. Zur Herstellung des Formteils mit dem Grundkörper aus dem faserverstärktem Material und der aus dem Schichtverbund gebildeten Oberfläche wird zunächst der Schichtverbund in das Presswerkzeug eingelegt, so dass die Folienseite des Schichtverbundes zur Werkzeugseite bzw. zur Wandung der Pressform weist. Vor der Kontaktierung mit dem Faser-Matrix-Halbzeug sollte der Schichtverbund idealerweise an die Innenkonturen der Pressform angepasst werden. Dieser Vorgang kann z.B. vakuumunterstützt erfolgen. Durch Anlegen eines Unterdrucks kann die Luft zwischen dem Schichtverbund und der Wandung der Pressform entfernt werden, so dass sich die Trägerfolie eng an die Innenkonturen der Pressform anlegen kann. Danach wird die Pressform mit dem Faser-Matrix-Halbzeug befüllt, das dann nur noch mit der Lackseite des Schichtverbundes in Kontakt treten kann.

In der Regel ist es üblich, die Innenwandungen von Pressformen vor Pressvorgängen mit einem Trennmittel zu versehen, um zu gewährleisten, dass sich hergestellte Formteile der Pressform problemlos entnehmen lassen. Entsprechende Trennmittel sind dem Fachmann bekannt. Überraschenderweise wurde beobachtet, dass die Trägerfolie die Funktion von sonst benötigten Trennmitteln übernehmen kann. Das erfindungsgemäße Verfahren zeichnet sich entsprechend auch dadurch aus, dass ein Presswerkzeug verwendet wird, das frei von einem herkömmlichen Trennmittel ist.

Das in einem erfindungsgemäßen Verfahren verwendete Faser-Matrix-Halbzeug weist bevorzugt eine thermoplastische oder duroplastische Matrix auf. Geeignete Matrixmaterialien sind beispielsweise Epoxid- oder Polyurethansysteme. Als Fasern umfasst es in bevorzugten Ausführungsformen Glas- und/oder Kohlenstofffasern. Faser-Matrix-Halbzeuge können sowohl eine feste als auch eine teigartige Konsistenz aufweisen. Feste Faser-Matrix-Halbzeuge liegen überwiegend in Band- oder Plattenform vor. Im erfindungsgemäßen Verfahren werden bevorzugt Faser-Matrix-Halbzeuge verwendet, die Verstärkungsfasern in flächiger Form, beispielsweise in Form einer Matte, aufweisen. Die Fasern sind dabei bevorzugt in einer aushärtbaren Kunststoffmatrix eingebettet, die unter Einwirkung von Druck und Temperatur aushärten kann. Geeignete Drücke und Temperaturen können in geeigneten Presswerkzeugen ohne Probleme erzeugt werden. Presswerkzeuge mit beheizbaren Pressformen gehören zum Stand der Technik.

Mit einem erfindungsgemäßen Verfahren hergestellte oder herstellbare Formteile bestehen aus einem Faserverbundwerkstoff und weisen eine lackierte Oberfläche auf, die mindestens eine Lackschicht, nämlich eine Schicht aus dem oben beschriebenen ersten Lack, gegebenenfalls aber noch eine oder mehrere weitere Lackschichten auf dieser ersten Lackschicht, beispielsweise aus dem erwähnten zweiten Lack, aufweist. Betreffend bevorzugte Ausführungsformen der verwendeten Lacke und des Faserverbundwerkstoffs wird auf die obigen Ausführungen Bezug genommen.

Weitere Merkmale der Erfindung ergeben sich auch aus der nun folgenden Beschreibung einer bevorzugten Ausführungsform in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

Zur Herstellung eines in einem erfindungsgemäßen Verfahren einsetzbaren Schichtverbundes wurden 250 Gewichtsteile Füllstoffpaste mit 20 Gewichtsteilen Butylglycol, 50 Gewichtsteilen demineralisiertem Wasser, 305 Gewichtsteilen Polyurethandispersion und 20 Gewichtsteilen Polyesterpolyol-Emulsion gemischt. Die dabei entstehende Mischung wurde fünf Minuten gerührt, danach erfolgte die Zugabe von weiteren 320 Gewichtsteilen Füllstoffpaste, 25 Gewichtsteilen Polyesterpolyol-Emulsion und zur Viskositätseinstellung weiteren 10 Gewichtsteilen demineralisiertem Wasser. Die entstehende Lackmischung ließ man 16 Stunden reifen, danach wurde ihr pH-Wert mit Dimethylethylamin (DMEA) auf einen Wert zwischen 8 und 9 eingestellt.

Nach Bereitstellung einer Trägerfolie (wahlweise einer Polyolefin- oder Polyethylenterephthalatfolie) wurde die hergestellte Lackmischung als erster Lack auf eine Seite dieser Folie aufgerakelt und anschließend bei erhöhten Temperaturen ausgehärtet. Es entstand ein Schichtverbund umfassend die Trägerfolie und den darauf aufgebrachten ersten Lack.

Zur Herstellung eines erfindungsgemäßen Formteils wurde der so hergestellte Schichtverbund in ein beheiztes Presswerkzeug eingelegt, so dass die Trägerfolie des Schichtverbundes zur Werkzeugseite bzw. zur Wandung der Pressform wies. Auf den Einsatz eines Trennmittels wurde verzichtet. Durch Anlegen eines Unterdrucks wurde die Luft zwischen der Folie und der Wandung der Pressform entfernt. Danach wurde die Pressform mit einem Faser-Matrix-Halbzeug breiartiger Konsistenz befüllt. Die Pressform wurde geschlossen. Wähend des Pressvorgangs härtete die Matrix des Faser-Matrix-Halbzeugs aus. Das dabei entstehende Formteil wurde aus der Form entnommen und einigen mechanischen Nachbearbeitungsschritten (Entgraten, Konturfräsen etc.) unterzogen. Danach wurde die Trägerfolie entfernt, wobei die Schicht aus dem ersten Lack freigelegt wurde. Diese wurde mit einem Flüssiglack als zweiter Lack überlackiert. Es wurde eine Lackoberfläche der Qualität "Automobil class A" erhalten.

## Patentansprüche

1. Verfahren zur Herstellung eines Formteils aus einem Faserverbundwerkstoff mit einer lackierten Oberfläche, das Verfahren mit den Schritten
• Bereitstellung eines Faser-Matrix-Halbzeugs
• Bereitstellung eines Schichtverbunds, der eine Trägerfolie umfasst, die einseitig mit einem ersten Lack beschichtet ist und
• flächiges Inkontaktbringen des Faser-Matrix-Halbzeugs mit der Lackseite des Schichtverbundes unter Druck und/oder Temperatur, wobei ein Formteil erhalten wird, das einen Grundkörper aus dem Faserverbundwerkstoff und eine Oberfläche aus dem Schichtverbund aufweist,
**dadurch gekennzeichnet, dass** die Trägerfolie von dem erhaltenen Formteil abgezogen und ein zweiter Lack auf den ersten Lack aufgetragen wird.

2. Verfahren nach Anspruch 1, **dadurch gekennzeichnet, dass** das Inkontaktbringen in einem Presswerkzeug unter dreidimensionaler Formgebung des Halbzeugs erfolgt.

3. Verfahren nach einem der Ansprüche 1 oder 2, **dadurch gekennzeichnet, dass** das Faser-Matrix-Halbzeug eine thermoplastische oder duroplastische Matrix und als Fasern Glas- und/ oder Kohlenstofffasern umfasst.

## Claims

1. Process for the production of a moulded part made of a fibre-composite material with a coated surface, wherein the process has the following steps:
• provision of a semi-finished fibre-matrix product
• provision of a laminate which comprises a carrier film coated on one side with a first surface-coating and
• establishing 2-dimensional contact between a surface of the semi-finished fibre-matrix product and the surface-coating side of the laminate under pressure and/or temperature, thereby obtaining a moulded part which comprises a base body made of the fibre-composite material and a surface made of the laminate,
**characterized in that** the carrier film is pulled off the obtained moulded part and a second surface-coating is applied onto the first surface-coating.

2. Process according to Claim 1, **characterized in that** the contact is established in a press mould with three-dimensional shaping of the semi-finished product.

3. Process according to Claim 1 or 2, **characterized in that** the semi-finished fibre-matrix product comprises a thermoplastic or thermoset matrix and, as fibres, glass fibres and/or carbon fibres.

## Revendications

1. Procédé de fabrication d'une pièce moulée à base d'un matériau composite fibreux avec une surface vernie, le procédé comprenant les étapes suivantes :
- la préparation d'un semi-fini fibres-matrice,
- la préparation d'un composite stratifié qui comprend une feuille support qui est revêtue d'un côté avec un premier vernis, et
- la mise en contact en surface du semi-fini fibres-matrice avec le côté vernis du composite stratifié sous pression et/ou température, une pièce moulée étant obtenue, qui comprend un corps de base en le matériau composite fibreux et une surface en le composite stratifié,
**caractérisé en ce que** la feuille support est retirée de la pièce moulée obtenue et un deuxième vernis est appliqué sur le premier vernis.

2. Procédé selon la revendication 1, **caractérisé en ce que** la mise en contact a lieu dans un moule à compression avec façonnage tridimensionnel du semi-fini.

3. Procédé selon l'une quelconque des revendications 1 ou 2, **caractérisé en ce que** le semi-fini fibres-matrice comprend une matrice thermoplastique ou duroplastique et des fibres de verre et/ou de carbone en tant que fibres.
